**Europäisches Patentamt**

**European Patent Office**

**Office européen des brevets**

(11) Veröffentlichungsnummer : **0 019 155 B1**

# EUROPÄISCHE PATENTSCHRIFT

(45) Veröffentlichungstag der Patentschrift : 11.08.82

(21) Anmeldenummer : 80102372.2

(22) Anmeldetag : 02.05.80
Die Akte enthält technische Angaben, die nach dem Eingang der Anmeldung eingereicht wurden und die nicht in dieser Patentschrift enthalten sind.

(51) Int. Cl.³ : **B 01 D 46/34**

(54) Vorrichtung zum Entstauben von Gasen.

(30) Priorität : 10.05.79 DE 2918779

(43) Veröffentlichungstag der Anmeldung : 26.11.80 (Patentblatt 80/24)

(45) Bekanntmachung des Hinweises auf die Patenterteilung : 11.08.82 Patentblatt 82/32

(84) Benannte Vertragsstaaten :
CH DE FR GB LI

(56) Entgegenhaltungen :
DE A 2 004 966
DE A 2 122 363
DE B 2 254 162
DE B 2 633 054
DE C 339 692
DE C 391 998
DE C 419 764
DE C 457 430
DE C 945 362

(73) Patentinhaber : BASF Aktiengesellschaft
Carl-Bosch-Strasse 38
D-6700 Ludwigshafen (DE)

(72) Erfinder : Pforr, Gerhard, Dr.
Budapester Strasse 26
D-6700 Ludwigshafen (DE)
Erfinder : Peschau, Gerhard
Hauptstrasse 50c
D-6710 Frankenthal (DE)
Erfinder : Schippmann, Guenter
Am Steingarten 6
D-6800 Mannheim 1 (DE)
Erfinder : Appl, Max, Dr.
Danziger Strasse 9
D-6701 Dannstadt-Schauernheim (DE)
Erfinder : Voelkl, Erfried, Dr.
Pierstrasse 10c
D-6710 Frankenthal (DE)
Erfinder : Stark, Hans, Dr.
Uhlandstrasse 3
D-6712 Bobenheim-Roxheim 2 (DE)

Vorrichtung zum Entstauben von Gasen

Vorliegende Erfindung betrifft eine Vorrichtung zum Entstauben von Gasen unter Verwendung eines Schüttschichtfilters.

In gasförmigen Reaktionsprodukten aus Festsfoffreaktionen werden in der Regel staubförmige Feststoffe mitgeführt. Der Staubgehalt dieser Prozeßgase tritt im allgemeinen bei deren Weiterverarbeitung störend in Erscheinung und muß daher entfernt werden. Die Entstaubung solcher Gase wird dann zu einem bisher nicht oder nicht befriedigend gelösten Problem, wenn das Prozeßgas noch korrosive Bestandteile, sei es das Wertprodukt selbst oder seien es Nebenprodukte, enthält, insbesondere dann, wenn das Prozeßgas bei hohen Temperaturen anfällt.

Die Entstaubung von Gasen unter Zuhilfenahme von Schüttschichtfiltern ist an sich bekannt und es sind bereits zahlreiche auf diesem Prinzip beruhende Vorrichtungen bekannt geworden. Beispielsweise sei auf DE-B-22 54 162 und DE-B-25 52 298 verwiesen. Hiernach kann das zu entstaubende Gas entweder entgegen der Flußrichtung des Filtergutes oder senkrecht dazu geführt werden. Um eine möglichst gleichmäßige Beaufschlagung des Schüttschichtfilters über seinen gesamten Querschnitt zu erzielen, sind in den Vorrichtungen Einbauten vorgesehen, die eine erwünschte Verteilung des zu reinigenden Gasstromes bewirken sollen. Den bisher bekannten Vorrichtungen zur Gasentstaubung mittels Schüttschichtfiltern ist gemeinsam, daß die aus Gründen der mechanischen Stabilität aus metallischen Werkstoffen hergestellten Elemente nicht genügend korrosionsbeständig sind und wegen ihres komplizierten Ausbaus nur sehr schwer, wenn überhaupt mit einer aufgebrachten Schicht aus korrosionsbeständigen Materialien geschützt werden können. Aus der DE-C-419 764 ist eine Vorrichtung zur Entstaubung von Gasen unter Verwendung eines Schüttschichtfilters beschrieben, bei der das Filtergut durch rechenförmige Rührarme im Bereich der Anströmfläche sowie durch Rührwerke im Inneren der Filtergutschicht bewegt wird. Auf diese Weise soll das Filtermaterial gleichmäßig staubaufnahmefähig bleiben, indem der Staub dauernd vom Filtermaterial abgesondert wird.

Bei der aus DE-C-945 362 bekannten, zwei übereinanderstehende Kammern aufweisenden Vorrichtung zum Reinigen und Entstauben heißer Gase, die ebenfalls mit einem Schichtbettfilter arbeitet, liegt im Ringraum, durch den die zu reinigenden Gase in die obere Kammer eingeführt werden und durch den die senkrecht verlaufende Seitenwandung unterbrochen wird, eine Böschung des Schüttguts vor, die auf dem Boden des Ringraums ruht. Unterhalb des Ringraums ist zwischen der oberen und unteren Kammer eine als Salz- oder Metallschmelzbad ausgebildete Schleuse vorgesehen, die gleichzeitig als Sperrflüssigkeit zwischen den beiden Kammern wirkt.

Der Erfindung liegt die Aufgabe zugrunde, eine Vorrichtung zum Entstauben von Gasen unter Verwendung eines Schuttoettfilters in einem Behälter mit rechteckigem Querschnitt, bestehend aus einer Trennplatte (5) und zumindest vom unteren Ende der Trennplatte nach unter zum Auslauf sich verjüngenden Wandungen, wobei die am unteren Rand der Trennplatten (5) erzeugte ebenen Böschung (7) des Filtermediums eine Kammer (3) abschließt, in die der Einlaß (2) für das zu reinigende Gas einmündet und einem am oberen Ende der Trennplatte angeordneten Einlaß (10) für das Filtergut an dem sich eine weitere Böschung (12) des Filtermediums ausbildet, durch die das gereinigte Gas aus dem Schüttbett (11) in einen Sammelraum (16) austritt, an dem ein Auslaß (17) für das gereinigte Gas angeordnet ist, wobei das fließfähige körnige Filtergut das Schüttbett von oben nach unten durchläuft, bereitzustellen, bei der einerseits eine über die gesamte Schüttschicht gleichmäßige Gasverteilung gewährleistet ist, und bei der andererseits die mit dem Gas in Berührung kommenden Konstruktionselemente, insbesondere die die Schüttschicht abstützenden Konstruktionselemente, so ausgestaltet sind, daß sie ohne konstruktive Schwierigkeiten mit ebenen Platten aus korrosionsbeständigen Materialien ausgekleidet werden können und darüber hinaus eine kontinuierliche Entstaubung der Gase auch bei Entnahme von mit Staub beladenen und Nachfüllung von frischem Filtermedium gewährleistet ist.

Es wurde gefunden, daß diese Aufgabe mit einer Vorrichtung gelöst werden kann, durch eine von oben nach unten durchgehende senkrechte Wandung (4) die parallel zu der vom oberen Ende des Behälters hineinkragenden Trennplatte (5) angeordnet ist, wobei die Trennplatte von den beiden der senkrechten Wandung benachbarten Wandungen abgestützt wird.

Die erfindungsgemäße Vorrichtung sei anhand der schematischen Figur, in der ein senkrechter Schnitt durch die erfindungsgemäße Vorrichtung dargestellt ist, beispielsweise erläutert.

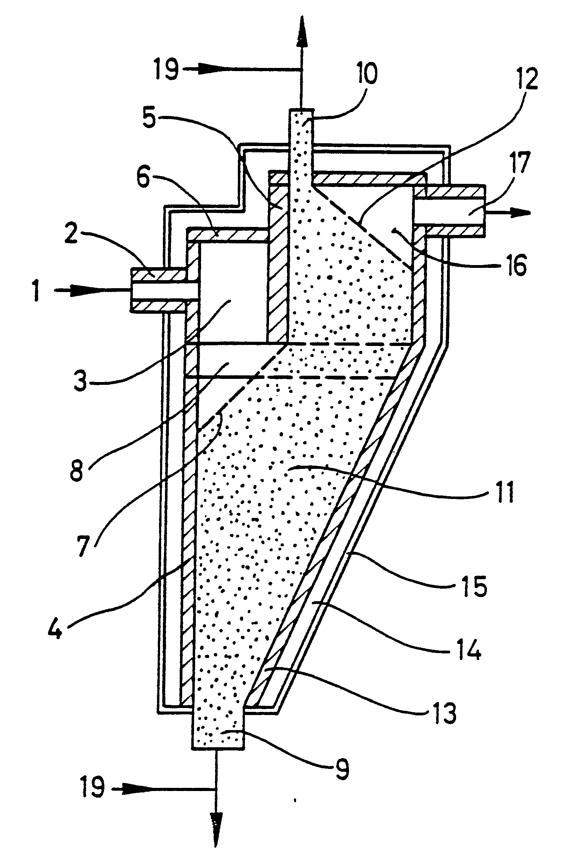

Das zu reinigende Gas wird durch Leitung (1) dem Einlaßstutzen (2) zugeführt und tritt von hier in die Kammer (3) ein. Diese Kammer wird gebildet durch die senkrechte Wandung (4), in der der Einlaßstutzen (2) angeordnet ist, und durch die dieser Wandung gegenüberliegenden vom oberen Ende des Behälters in das Innere des Behälters hineinkragenden Trennplatte (5). Nach oben wird die Kammer durch den Deckel (6) abgeschlossen und nach unten begrenzt durch die Böschung (7) des Filtergutes. Die seitlichen Begrenzungen werden durch die an die senkrechte Wandung angrenzenden, in der Zeichenebene liegenden und in der Figur nicht veranschaulichten Wandungen gebildet. Wie in der Figur ebenfalls nicht veranschaulicht, kann die Trennwand (5) durch mit diesen Seitenwandungen fest verbundenen Vorsprüngen abgestützt werden. Eine andere Möglichkeit ist in der Figur dargestellt, wobei die Trennwand durch zwei entlang den beiden in der Zeichenebene liegenden Seitenwandungen angeordneten und den beiden anderen Wandungen verankerten Balken (8) abgestützt ist.

Die drei weiteren der oberen Teil des Behälters bildenden Wandungen verlaufen im Bereich der Trennplatte (5) ebenfalls senkrecht, vom unteren Rand der Trennplatte (5) verjüngen sie sich jedoch konisch zu dem im unteren Teil des Behälters angeordneten Auslauf (9).

Im oberen Teil des Behälters ist auf der der Kammer gegenüberliegenden Seite der Trennwand (5) ein Einlaßrohr (10) für das körnige Filtergut (11) angeordnet. Das Rohr ist zweckmäßig in unmittelbarer Nähe der Trennwand und möglichst zentral angeordnet. Beim Einfüllen von Filtergut durch das Einlaßrohr bildet sich eine Böschung (12) aus. Bei Verwendung eines Rohres ist diese Böschung, deren Neigung dem Schüttwinkel des betreffenden Gutes entspricht, gekrümmt und weist die Form eines Kegels auf, der von der Trennplatte (5) und den Seitenwandungen (d.h. den in der Zeichenebene liegenden Wandungen) begrenzt bzw. angeschnitten wird.

Die erfindungsgemäße Vorrichtung wird von ebenen Flächen begrenzt, so daß die Innenwandungen, falls nach Art des zu reinigenden Gases erforderlich, ohne Schwierigkeiten mit einem korrosionsbeständigen Material ausgekleidet werden können, das seinerseits aus einfachen plattenförmigen Elementen besteht. Aus diesem Grunde können für die Auskleidung Materialien verwendet werden, die einerseits korrosionsbeständig sind und aus denen aber andererseits wegen ihrer besonderen mechanischen Eigenschaften komplizierte gebogene oder sonstwie geformte mechanisch stabile Konstruktionselemente nicht hergestellt werden können, z.B. Glas oder Quarz.

Aus der Figur ist die Konstruktion der Außenwandungen für den Fall der Behandlung von korrosiven, gegebenenfalls gleichzeitig heißen Gasen zu ersehen. Für diesen Fall ist die Wandung der erfindungsgemäßen Vorrichtung dreischichtig aufgebaut.

Mit (13) ist die Auskleidung der Innenwandung mit korrosionsbeständigem Material aus ebenen Platten, z.B. aus temperaturwechselbeständigem Glas oder Quarz bezeichnet. (14) bedeutet eine wärmedämmende Schicht, z.B. aus geschäumtem Glas oder Quarzglas, auf der die Plattenelemente aus dem korrosionsbeständigem Material satt aufliegen und somit wirkungsvoll gegen mechanische Beanspruchung geschützt sind. Nach außen ist die Dämmschicht von Elementen (15) aus einem tragenden Material, z.B. Eisenwerkstoffen wie Stahl und dgl., umgeben, das durch die inneren Schichten wirkungsvoll gegen Korrosion geschützt ist.

Zum Betrieb der erfindungsgemäßen Vorrichtung wird diese zunächst bei geschlossener Auslaßöffnung (9) mit rieselfähigem, körnigem Filtergutmaterial gefüllt, wobei sich die oben bereits beschriebenen ebene Böschung (7) und gekrümmte Böschung (12) bilden. Das mit Staub beladene Abgas gelangt zunächst in die Kammer (3) und tritt dann durch Böschung (7) in die Filtergutschüttschicht (11) ein, durchströmt die Schicht in Richtung Böschung (12), wird im Sammelraum (16) gesammelt und verläßt von Staub befreit die Vorrichtung durch Stutzen (17). Der Staub wird in der Schüttschicht abgelagert und führt zu einem kontinuierlichen Anstieg des Druckverlustes des Prozeßgases zwischen Eintrittsstelle in die Schüttgutschicht und Austrittsstelle. Der Druckverlust kann dazu herangezogen werden, um bei Überschreiten eines vorbestimmten Wertes den Auslaß (9) zu öffnen und das mit Staub beladene Filtergut abzuziehen. Während des Abziehens rutscht das zwischen unterer ebener Böschung (7) und oberer gekümmter Böschung (12) liegende staubbeladene Filtergut in den konisch sich verjüngenden unteren Teil des Behälters und frisches Gut rutscht aus einer in der Figur nicht dargestellten Vorlage durch den Einlaßstutzen (10) nach. Das Abziehen des Filtergutes wird so lange fortgesetzt, bis der Druckverlust wieder auf den ursprünglichen Wert abgesunken ist. Für das Abziehen des mit Staub beladenen Filtergutes werden nur wenige Minuten benötigt. Anschließend wird der Auslaß wieder geschlossen. Für die Beladung des Filtergutes mit Staub werden je nach Staubgehalt des zu reinigenden Gases mehrere Stunden benötigt. Ein weiterer Vorteil der erfindungsgemäßen Vorrichtung besteht darin, daß sie auch während des Wechsels des Filtergutes weiter betrieben werden kann, d.h. daß ihr Betrieb voll kontinuierlich ist.

Um mit Sicherheit zu vermeiden, daß keine Gase durch den Einlaß für frisches Filtergut und den Auslaß für staubbeladenes Filtergut entweichen, können durch die beiden Leitungen (19) Inertgase eingeführt werden. Dies erfolgt während des Betriebes der Vorrichtung, d.h. sowohl während der Beladungs- als auch während der Abziehphase. Das Inertgas gelangt zusammen mit dem gereinigten Gas in den Sammelraum (16) und wird durch den Stutzen (17) abgezogen.

Bei Gasen, die sublimierbare Verbindungen enthalten, z.B. Prozeßgase der Aluminiumchlorid-Synthese wie sie bei der Chlorierung von Bauxit oder Tonerde in Gegenwart von Reduktionsmitteln wie Kohlenstoff oder Kohlenmonoxid anfallen und die als sublimierbare Verbindung Aluminiumchlorid enthalten, ist es unerwünscht, daß die sublimierbare Verbindung in der Filtervorrichtung ausfällt. In diesen Fällen können die Inertgase aufgeheizt sein.

Bei der Entstaubung von korrosiven und heißen Gasen muß nicht nur die Innerwandung der erfindungsgemäßen Vorrichtung aus temperatur- und korrosionsbeständigem Material gefertigt sein, sondern auch das Filtergut muß diesen Bedingungen Genüge leisten. Außerdem muß es unter den Betriebsbedingungen fließ- bzw. rieselfähig sein. Geeignete Materialien für das Filtergut sind z.B. Quarzsande, Quarzkiese, Kohlenstoffgranulate, Bimssplit oder Sande bzw. Kiese aus anderem korrosionsbeständigem Material.

Bei der Behandlung von Gasen mit Komponenten, die bei niederer Temperatur kondensieren bzw. desublimieren darf die Wandtemperatur nicht unter die Temperatur des Gases absinken, so daß die äußeren Wandungen zweckmäßig durch Anordnung von Dämmschichten isoliert werden, wie oben bereits beschrieben. Diese Dämmschichten, die entlang den inneren Wandungen angeordnet werden, dienen gleichzeitig als Träger der inneren Auskleidungen aus korrosionsstabilem Material. Die als ebene Platten ausgeführten Konstruktionselemente müssen nicht an ihren Nahtstellen abgedichtet werden. Staubpartikel aus dem Gas lagern sich in den Spalten zwischen den einzelnen Konstruktionselementen ab, vermindern somit den Gasdurchtritt durch die Spalte und führen demzufolge zu einer gewissen Abdichtung auch innerhalb der Dämmschicht. Heiße und gegebenenfalls korrosive Gase gelangen allenfalls durch Diffusion nur sehr langsam bis an den äußeren aus metallischen Werkstoffen hergestellten tragenden Mantel, kühlen auf ihrem Wege dorthin stark ab und können somit nur eine geringe Aufheizung des Metallmantels bewirken. Die bei der Aluminiumchlorid-Synthese anfallenden Prozeßgase, die eine Temperatur von etwa 250 bis 400 °C aufweisen, wirken wegen ihres Chlor- und Phosgen-Gehaltes sehr korrosiv auf metallische Werkstoffe z.B. Stahl. Trotzdem kann bei der erfindungsgemäßen Vorrichtung der äußere Mantel aus Stahl hergestellt werden, da dieser allenfalls auf 50 °C nicht übersteigende Temperaturen aufgeheizt wird. Bei diesen Temperaturen ist aber Normalstahl absolut beständig gegen Chlor und Phosgen.

Zusammenfassend kann also festgestellt werden, daß die erfindungsgemäße Vorrichtung besonders geeignet ist für die Entstaubung korrosiv Gase, da ihre inneren Wandungen in einfacher Weise mit ebenen Platten aus korrosionsbeständigem Material ausgekleidet werden kann. Die Vorrichtung kann kontinuierlich betrieben werden, und zwar selbst dann, wenn das mit Staub beladene Filtergut durch frisches Filtergut ersetzt werden muß. Durch die gute Gasverteilung wird die Filtergut-Schüttbett-Schicht gleichmäßig mit Staub beladen und somit gut ausgenutzt.

## Ansprüche

1. Vorrichtung zum Entstauben von Gasen unter Verwendung eines Schüttbettfilters in einem Behälter mit rechteckigem Querschnitt, bestehend aus einer Trennplatte (5) und zumindest vom unteren Ende der Trennplatte nach unten zum Auslauf sich verjüngenden Wandungen, wobei die am unteren Rand der Trennplatten (5) erzeugte ebene Böschung (7) des Filtermediums eine Kammer (3) abschließt, in die der Einlaß (2) für das zu reinigende Gas einmündet und einem am oberen Ende der Trennplatte angeordneten Einlaß (10) das Filtergut an dem sich eine weitere Böschung (12) der Filtermediums ausbildet, durch die das gereinigte Gas aus dem Schüttbett (11) in einen Sammelraum (16) austritt, an dem ein Auslaß (17) für das gereinigte Gas angeordnet ist, wobei das fließfähige körnige Filtergut das Schüttbett von oben nach unten durchläuft, gekennzeichnet durch eine von oben nach unten durchgehende senkrechte Wandung (4) die parallel zu der vom oberen Ende des Behälters hineinkragenden Trennplatte (5) angeordnet ist, wobei die Trennplatte von den beiden der senkrechten Wandung benachbarten Wandungen abgestützt wird.

2. Vorrichtung nach Anspruch 1, dadurch gekennzeichnet, daß die Wandungen des Behälters dreischichtig aufgebaut sind, wobei die innere Schicht (13) aus einem korrosionsstabilen Material besteht, das auf einer mittleren Schicht (14) aus porösem ebenfalls korrosionsbeständigem Material aufliegt, die von einer äußeren Schicht (15) aus einem metallischen Werkstoff umgeben ist.

3. Vorrichtung nach Ansprüchen 1 und 2, dadurch gekennzeichnet, daß die innere Schicht (13) aus Platten gebildet ist.

## Claims

1. Apparatus for de-dusting gases using a granular-bed filter in a vessel of rectangular cross-section, said apparatus comprising a partition (5) and walls which taper, at least from the level of the lower end of the partition, downwardly to the outlet, the plane talus (7) of the filter medium, formed at the lower edge of the partition (5), shutting off a chamber (3) into which the inlet (2) for the gas to be purified opens, and an inlet (10), located at the upper end of the partition, for the filter medium, at which inlet a further talus (12) of the filter medium forms through which the purified gas issues from the granular bed (11) into a collecting chamber (16) on which an outlet (17) for the purified gas is arranged, the flowable granular filter medium passing downwardly through the bed, characterized by a vertical wall (4) which extends continuously downward and is arranged parallel to the partition (5) protruding into the vessel from the upper end thereof, the partition being supported by the two walls adjacent to the vertical wall.

2. Apparatus as claimed in claim 1, characterized in that the walls of the vessel are of a three-layer construction, the inner layer (13) consisting of a corrosion-resistant material which rests on a middle layer (14) of a porous material which is also corrosion-resistant, the middle layer being surrounded by an outer layer (15) of a metallic material.

3. Apparatus as claimed in claims 1 and 2,

characterized in that the inner layer (13) is made of sheets.

**Revendications**

1. Dispositif pour le dépoussiérage de gaz, avec utilisation d'un lit filtrant de matière en vrac dans un récipient de section rectangulaire, se composant d'une plaque de cloisonnement (5) et de parois qui se resserrent vers le bas en direction de l'orifice de sortie, au moins à partir de l'extrémité inférieure de la plaque de cloisonnement, le talus plan (7) d'agent filtrant qui est créé au bord inférieur de la plaque de cloisonnement (5) fermant une chambre (3) dans laquelle débouche l'admission (2) pour le gaz à épurer, ainsi que d'une admission (10) pour la matière filtrante, située à l'extrémité supérieure de la plaque de cloisonnement et au niveau de laquelle se forme un autre talus (12) d'agent filtrant, à travers lequel le gaz épuré, provenant du lit en vrac (11), sort dans une chambre collectrice (16) où est disposé un orifice de sortie (17) pour le gaz épuré, la matière filtrante, granulaire et fluide, parcourant de haut en bas le lit en vrac, caractérisé par une paroi (4), complètement verticale de haut en bas, disposée parallèlement à la plaque de cloisonnement (5) qui plonge dans le récipient depuis l'extrémité supérieure de celui-ci, la plaque de cloisonnement prenant appui sur les deux parois adjacentes à la paroi verticale.

2. Dispositif selon la revendication 1, caractérisé en ce que les parois du récipient sont réalisées en trois couches, la couche interne (13) étant faite d'un matériau résistant à la corrosion qui est appliqué sur une couche moyenne (14) d'un matériau poreux également résistant à la corrosion, lequel est entouré par une couche externe (15) en un matériau métallique.

3. Dispositif selon la revendication 1 ou 2, caractérisé en ce que la couche interne (13) est composée de plaques.